# EUROPEAN PATENT APPLICATION

(11) **EP 4 811 433 A1**
(43) Date of publication of application: **23.09.2026**
(21) Application number: 23958737.1
(22) Date of filing: 14.12.2023
(51) Int. Cl.: H01M 4/13, H01M 10/052

(54) **BATTERY ELECTRODE PLATE AND BATTERY**

(30) Priority: 16.11.2023 CN 202311535554; 16.11.2023 CN 202323106765 U
(71) Applicant: Huizhou EVE Power Co., Ltd, Tonghu Town, Zhongkai High-tech District Huizhou, Guangdong 516000 (CN); Eve Power Co., Ltd., Jingmen, Hubei 448000 (CN)
(72) Inventor: CHENG, Mengsi, Huizhou, Guangdong 516000 (CN); WANG, Chao, Huizhou, Guangdong 516000 (CN); ZENG, Hanmin, Huizhou, Guangdong 516000 (CN); HE, Wei, Huizhou, Guangdong 516000 (CN); LIU, Jincheng, Huizhou, Guangdong 516000 (CN)
(74) Representative: Michalski Hüttermann & Partner mbB
(86) International application number: PCT/CN2023/138610
(87) International publication number: WO 2025/102469

(57) **Abstract**

A battery electrode sheet and a battery are provided in the disclosure. The battery electrode sheet includes a current collector, a first coating layer, a second coating layer, and at least one groove. The first coating layer is disposed on either side or both sides of the current collector. The second coating layer is stacked on the first coating layer. The groove is defined on the second coating layer. Electrolyte is stored in the groove, so that the wetting effect of the electrolyte on the battery electrode sheet is improved, and the flow rate of the electrolyte in the battery electrode sheet is accelerated. As a result, the reaction area of active material on the surface of the battery electrode sheet is increased. This design mitigates lithium plating at both sides and in the middle portion of the battery electrode sheet. Moreover, additional space is provided, so as to mitigate electrode sheet expansion, material compression, and material fragmentation. Accordingly, the cycle performance and the fast-charging performance of the battery are improved, and the cycle life of the battery is prolonged.

## Description

This application claims priority to Chinese Patent Application No. 2023231067657, filed November 16, 2023, and Chinese Patent Application No. 2023115355547, filed November 16, 2023, the entire disclosure of both of which are incorporated herein by reference.

### TECHNICAL FIELD

This disclosure relates to the field of battery technology, and in particular, to a battery electrode sheet and a battery.

### BACKGROUND

With the rapid development of the new energy era, lithium batteries have also experienced rapid advancement. In recent years, electronic devices such as mobile phones and tablets have been upgraded very frequently. Meanwhile, hybrid electric vehicles and new energy electric vehicles have gradually become popular. As a result, higher requirements are being placed on the performance of products in the new energy industry. Therefore, high-performance lithium-ion secondary batteries featuring large capacity, high energy density, and fast charge/discharge capability have drawn extensive attention. However, safety concerns arising from these developments have also come into focus. In particular, issues such as battery fires and explosions require further attention and resolution. During long-term use of a battery, a negative electrode sheet of the battery may expand, causing compression that may lead to electrolyte accumulation on both sides of the sheet, which may result in lithium plating at edges of both sides of the negative electrode. Moreover, hindered electrolyte reflux may cause the middle region of the negative electrode sheet to blacken due to insufficient electrolyte, thereby affecting the cycle performance and fast-charging performance of the battery. How to avoid problems such as lithium plating and sharp drops in capacity retention caused by obstructed electrolyte flow inside the battery during cycling, fast charging, etc. has become an urgent problem that needs to be solved.

### TECHNICAL PROBLEM

In order to overcome at least one of the deficiencies of the related art described above, the disclosure provides a battery electrode sheet that improves the electrolyte storage capacity of the battery electrode sheet, mitigates expansion of the battery electrode sheet and lithium plating at both sides and in the middle portion of the battery electrode sheet, etc., thereby improving the cycle performance and fast-charging performance of the battery.

### TECHNICAL SOLUTIONS

In a first aspect, the disclosure provides a battery electrode sheet, which includes a current collector, a first coating layer, a second coating layer, and at least one groove. The first coating layer is disposed on either side or both sides of the current collector. The second coating layer is stacked on the first coating layer. The groove is defined on the second coating layer.

In the battery electrode sheet, electrolyte is stored in the groove, so that the wetting effect of the electrolyte on the battery electrode sheet is improved, and the flow rate of the electrolyte in the battery electrode sheet is accelerated. As a result, the reaction area of active material on the surface of the battery electrode sheet is increased. This design mitigates lithium plating at both sides and in the middle portion of the battery electrode sheet. Moreover, additional space is provided, so as to mitigate electrode sheet expansion, material compression, and material fragmentation. Accordingly, the cycle performance and the fast-charging performance of the battery are improved, and the cycle life of the battery is prolonged.

In a second aspect, the disclosure provides a battery, which includes the battery electrode sheet described above.

### BENEFICIAL EFFECTS

Electrolyte is stored in the groove, so that the wetting effect of the electrolyte on the battery electrode sheet is improved, and the flow rate of the electrolyte in the battery electrode sheet is accelerated. As a result, the reaction area of active material on the surface of the battery electrode sheet is increased. This design mitigates lithium plating at both sides and in the middle portion of the battery electrode sheet. Moreover, additional space is provided, so as to mitigate electrode sheet expansion, material compression, and material fragmentation. Accordingly, the cycle performance and the fast-charging performance of the battery are improved, and the cycle life of the battery is prolonged.

### BRIEF DESCRIPTION OF THE DRAWINGS

FIG. 1 is a schematic structural view of form 1 of a battery electrode sheet according to an embodiment of the disclosure.
FIG. 2 is another schematic structural view of form 1 of the battery electrode sheet according to an embodiment of the disclosure.
FIG. 3 is a schematic structural view of form 2 of a battery electrode sheet according to an embodiment of the disclosure.
FIG. 4 is a schematic structural view of form 3 of a battery electrode sheet according to an embodiment of the disclosure.
FIG. 5 is a schematic structural view of form 4 of a battery electrode sheet according to an embodiment of the disclosure.
FIG. 6 is a schematic structural view of form 5 of a battery electrode sheet according to an embodiment of the disclosure.
FIG. 7 is a schematic structural view of form 6 of a battery electrode sheet according to an embodiment of the disclosure.
FIG. 8 is another schematic structural view of form 6 of the battery electrode sheet according to an embodiment of the disclosure.
FIG. 9 is a schematic structural view of form 7 of a battery electrode sheet according to an embodiment of the disclosure.
FIG. 10 is a schematic structural view of form 8 of a battery electrode sheet according to an embodiment of the disclosure.

The meanings of the reference signs are as follows: 1-current collector; 2-first coating layer; 3-second coating layer; 4-groove.

### IMPLEMENTATIONS OF THE DISCLOSURE

In describing the disclosure, it may be noted that the orientation or positional relationships indicated by the terms "upper", "lower", "front", "rear", "left", "right", "vertical", "horizontal", "top", "bottom", "inner", "outer", etc., are based on the orientation or positional relationships shown in the accompanying drawings, and are merely for the convenience of describing the disclosure and simplifying the illustration, rather than indicating or implying that the device or element referred to must have a specific orientation, be constructed and operated in a specific orientation, and therefore should not be construed as limiting the disclosure.

Unless otherwise defined, all technical and scientific terms used herein have the same meaning as commonly understood by those skilled in the art to which the disclosure pertains. The terms used herein in the specification of the disclosure are only for the purpose of describing specific embodiments, and are not intended to limit the disclosure.

In an embodiment, the areal density of the first coating layer is greater than the areal density of the second coating layer.

In an embodiment, the compacted density of the first coating layer is greater than the compacted density of the second coating layer.

In an embodiment, the groove is arranged in the transverse direction (TD) of the battery electrode sheet or in the machine direction (MD) of the battery electrode sheet.

In an embodiment, the groove is arranged vertically or obliquely in the TD direction of the battery electrode sheet.

In an embodiment, the groove has an inclination angle *α,* and *α* is expressed as follows: ${tan}^{- 1} \frac{L}{S} \leq α \leq 90 ° ;$ where *S* represents the length of the current collector, and *L* represents the width of the active coating layer.

In an embodiment, at least two grooves are defined on the second coating layer, and the grooves are arranged in at least one of an intersecting pattern and a spaced-apart pattern.

In an embodiment, when the groove is defined by laser etching or layered coating, the depth of the groove on the current collector is denoted as *d,* and *d* is expressed as follows: $d = \frac{SL \left({d}_{1}{P}_{1}{w}_{1}+{d}_{2}{P}_{2}{w}_{2}\right) - M}{{nabP}_{2} {w}_{2}} ;$ where *a* represents the length of the groove, *b* represents the width of the groove, *d* represents the depth of the groove on the current collector, *P*₂ represents the compacted density of the second coating layer, *w*₂ represents the proportion of active material in the second coating layer, *d₂* represents the thickness of the second coating layer, *S* represents the length of the current collector, *L* represents the width of the active coating layer, *d*₁ represents the thickness of the first coating layer, *P*₁ represents the compacted density of the first coating layer, *w*₁ represents the proportion of active material in the first coating layer, *M* represents the weight of active material in the active coating layer, and *n* represents the number of the grooves on the current collector.

In an embodiment, the proportion of active material loss caused by defining the groove on either side of the current collector is denoted as *R,* and *R* is expressed as follows: $R = \frac{{nabdP}_{2} {w}_{2}}{SL \left({d}_{1}{P}_{1}{w}_{1}+{d}_{2}{P}_{2}{w}_{2}\right)} \times 100 % .$

In an embodiment, when the groove is defined by rolling, the depth of the groove on the current collector satisfies *d ≤ d₂*; where *d* represents the depth of the groove on the current collector, and *d*₂ represents the thickness of the second coating layer.

In an embodiment, the proportion of active material loss caused by defining the groove 4 on either side of the current collector 1 is denoted as *R,* and *R* is expressed as follows: $R = \frac{nabd}{SL \left({d}_{1}+{d}_{2}\right)} \times 100 % .$

In an embodiment, 0.01% ≤ *R* ≤ 20%.

In an embodiment, the width of the groove is less than or equal to the width of the active coating layer.

In an embodiment, the length of the groove is less than or equal to the length of the current collector.

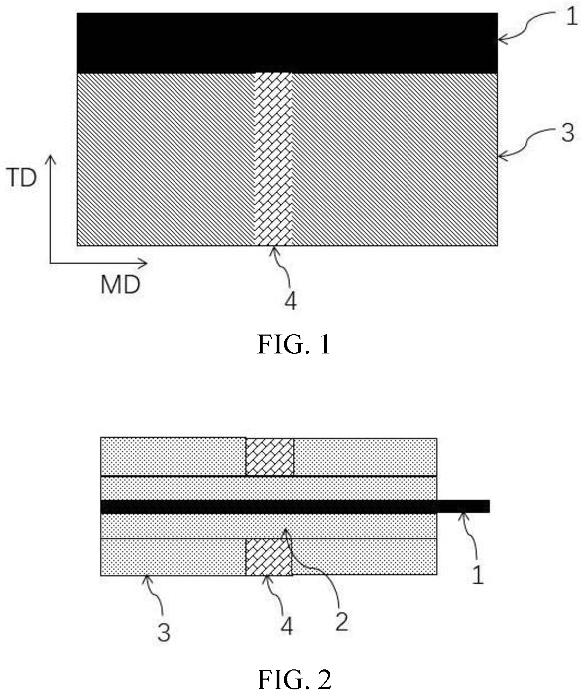

Referring to FIG. 1 to FIG. 10, the disclosure provides a battery electrode sheet, which includes a current collector 1, a first coating layer 2, a second coating layer 3, and at least one groove 4. In some embodiments, the first coating layer 2 is disposed on either side or both sides of the current collector 1, the second coating layer 3 is stacked on the first coating layer 2, and the groove 4 is defined on the second coating layer 3. Both the first coating layer 2 and the second coating layer 3 are composed of active material. Preferably, the groove 4 is defined on the second coating layer 3, so that the wettability of the electrolyte on the battery electrode sheet and the electrolyte storage capacity of the battery electrode sheet are improved. As a result, the contact reaction area of the active material on the battery electrode sheet is increased. This design mitigates the expansion of the battery electrode sheet as well as lithium plating at both sides and in the middle portion of the battery electrode sheet. Accordingly, the cycle performance and the fast-charging performance of the battery are improved.

Optionally, one or more grooves 4 are defined on the second coating layer 3. Optionally, the groove 4 on the second coating layer 3 may be determined according to actual conditions. Electrolyte is stored in the groove 4, so that the wetting effect of the electrolyte on the battery electrode sheet is improved, and the flow rate of the electrolyte in the battery electrode sheet is accelerated. As a result, the reaction area of active material on the surface of the battery electrode sheet is increased. This design mitigates lithium plating at both sides and in the middle portion of the battery electrode sheet. Moreover, additional space is provided, so as to mitigate electrode sheet expansion, material compression, and material fragmentation. Accordingly, the cycle performance and the fast-charging performance of the battery are improved, and the cycle life of the battery is prolonged.

Optionally, the first coating layer 2 and the second coating layer 3 are stacked on either side or both sides of the current collector 1 to form an active coating layer. When the first coating layer 2 and the second coating layer 3 are stacked only on one side of the current collector 1, corresponding active material may be disposed on the other side of the current collector 1 to form another active coating layer.

Optionally, the groove 4 may be defined on the second coating layer 3 by rolling using a roller. Preferably, the roller is provided with protrusions. Optionally, multiple protrusions may be provided on the roller. Preferably, the sizes of the multiple protrusions on the roller are different from one another. Further, the arrangement directions of the multiple protrusions on the roller are different from one another. Optionally, during the coating or cold-pressing, a roller having protrusions of different sizes and different arrangement directions on the surface is used to roll the second coating layer 3 on the current collector 1, so that multiple grooves 4 of different sizes and different arrangement directions are defined on the second coating layer 3.

Optionally, the groove 4 on the second coating layer 3 may be defined by laser ablation. Optionally, after the active material is coated on the current collector 1 to form the first coating layer 2 and the second coating layer 3 stacked on each other, the groove 4 may be defined on the second coating layer 3 by laser ablating the active material on the second coating layer 3. Optionally, after cold-pressing the active material coated on the current collector 1, the groove 4 is defined on the second coating layer 3 by laser ablating the active material on the second coating layer 3. Optionally, before winding the current collector 1 on which the first coating layer 2 and the second coating layer 3 are stacked, the groove 4 is defined on the second coating layer 3 by laser ablating the active material on the second coating layer 3. Further, the burned active material on the battery electrode sheet may be suctioned and removed by equipment such as a dust collector, without the need for an additional cleaning process for the electrode sheet.

Optionally, the second coating layer 3 may be fully coated on the side of the first coating layer 2 away from the current collector 1, and the groove 4 may be defined on the second coating layer 3 by laser etching or rolling, i.e., the second coating layer 3 may exist at the bottom of the groove 4 to reduce the loss of active material. Optionally, the second coating layer 3 may be coated on selected regions of the side of the first coating layer 2 away from the current collector 1, and the groove 4 may be defined directly on the second coating layer 3 by a dual-layer coating process, so that the formation speed of the groove 4 is increased, and there is no second coating layer 3 at the bottom of the groove 4.

In some embodiments, the first coating layer 2 and the second coating layer 3 are respectively disposed in different regions on the same side of the current collector 1. Optionally, the first coating layer 2 and the second coating layer 3 are stacked. Optionally, the first coating layer 2 is coated on the current collector 1, and the second coating layer 3 is coated on the first coating layer 2. Optionally, the areal density of the first coating layer 2 is greater than the areal density of the second coating layer 3, and the groove 4 is defined on the second coating layer 3. This design avoids excessive loss of the active material on the current collector 1 when the groove 4 is defined on the second coating layer 3. Otherwise, such loss could significantly affect the rated capacity or the charge N/P ratio of the battery, leading to undesirable phenomena such as low capacity or lithium plating, thereby seriously affecting the cycle performance and storage performance of the battery. That is, when the weight of the active material on one side of the current collector 1 is within a predetermined range, by making the areal density of the first coating layer 2 greater than the areal density of the second coating layer 3 and defining the groove 4 on the second coating layer 3, the amount of active material loss due to the groove 4 on the second coating layer 3 may be reduced. This effectively alleviates the impact of defining the groove 4 on the second coating layer 3 on the cycle performance and storage performance of the battery.

In some embodiments, the battery capacity is positively correlated with the compacted density, i.e., the greater the compacted density, the larger the battery capacity. Optionally, the compacted density of the first coating layer 2 is greater than the compacted density of the second coating layer 3. This design prevents the formation of the groove 4 on the second coating layer 3 from causing a significant change in the compacted density of the active material on the current collector 1. Such a change would otherwise lead to a notable drop in battery capacity. Consequently, the impact of defining the groove 4 on the second coating layer 3 on the battery capacity is reduced.

In some embodiments, the thickness of the first coating layer 2 is greater than the thickness of the second coating layer 3. Optionally, the first coating layer 2 and the second coating layer 3 are stacked, and the groove 4 is defined on the second coating layer 3. This design avoids excessive loss of the active material on the current collector 1 caused by defining the groove 4, which would otherwise affect the cycle performance and storage performance of the battery. That is, by making the thickness of the first coating layer 2 greater than the thickness of the second coating layer 3, the amount of active material loss when the groove 4 is defined on the second coating layer 3 is reduced. This effectively ensures the cycle performance and storage performance of the battery after the groove 4 is defined on the second coating layer 3.

In some embodiments, the first coating layer 2 and the second coating layer 3 are respectively arranged in different regions on the same side of the current collector 1. Optionally, the first coating layer 2 and the second coating layer 3 are stacked. Optionally, the first coating layer 2 is coated on the current collector 1, and the second coating layer 3 is coated on the first coating layer 2. The areal density of the first coating layer 2 is greater than the areal density of the second coating layer 3, and the thickness of the first coating layer 2 is greater than the thickness of the second coating layer 3. Further, the compacted density of the first coating layer 2 is greater than the compacted density of the second coating layer 3. Therefore, the impact of defining the groove 4 on the second coating layer 3 on the mass, areal density, and compacted density of the active material on the current collector 1 is significantly reduced. In this way, declines in battery capacity, cycle performance, and storage performance that would otherwise result from defining the groove 4 on the second coating layer 3 can be avoided.

In some embodiments, the battery electrode sheet may be a positive electrode sheet of a battery. Optionally, the active material may be made of any one or a mixture of several of lithium iron phosphate, nickel-cobalt-manganese ternary material, lithium manganate, lithium cobaltate, and lithium nickel cobalt aluminate, etc. Optionally, the active material made of any one or a mixture of several of lithium iron phosphate, nickel-cobalt-manganese ternary material, lithium manganate, lithium cobaltate, and lithium nickel cobalt aluminate, etc., is sequentially arranged in different regions on the same side of the current collector 1, so that the first coating layer 2 and the second coating layer 3 that are stacked are formed on the current collector 1.

In some embodiments, the battery electrode sheet may be a negative electrode sheet of a battery. Optionally, the active material may be made of any one or a mixture of several of artificial graphite, natural graphite, hard carbon, soft carbon, and silicon, etc. Optionally, the active material made of any one or a mixture of several of artificial graphite, natural graphite, hard carbon, soft carbon, and silicon, etc., is sequentially arranged in different regions on the same side of the current collector 1, so that the first coating layer 2 and the second coating layer 3 that are stacked are formed on the current collector 1.

In some embodiments, the groove 4 on the second coating layer 3 may be determined according to actual conditions, and the width, length, and depth of the groove 4 are to be fully considered to avoid affecting the rated capacity or the charge N/P ratio of the battery as much as possible, where the N/P ratio is the ratio of the negative electrode capacity to the positive electrode capacity of the battery.

Optionally, the length of the groove 4 is less than or equal to the length of the current collector 1. Optionally, limited by the existing processing technology, the length of the groove 4 is greater than or equal to 0.005 mm, i.e., the current minimum value of the length of the groove 4 may be 0.005 mm, but along with the development of processing techniques and corresponding processing equipment, the minimum value of the length of the groove 4 may be further reduced to the range of (0, 0.005 mm). Optionally, the maximum value of the length of the groove 4 is equal to the length of the current collector 1. It is specified that the groove 4 shall not appear on the current collector 1, so as to prevent the phenomenon of electrode sheet breakage due to uneven tension in subsequent processes such as winding.

Optionally, the groove 4 is less than or equal to the width of the active coating layer. Optionally, limited by the existing processing technology, the width of the groove 4 is greater than or equal to 0.005 mm, i.e., the current minimum value of the width of the groove 4 may be 0.005 mm, but along with the development of processing techniques and corresponding processing equipment, the minimum value of the width of the groove 4 may be further reduced to the range of (0, 0.005 mm]. Optionally, the width of the groove 4 may be equal to the width of the active coating layer, i.e., the length of the groove 4 in the MD direction may be equal to the length of the electrode sheet, which means that the groove 4 may penetrate through the material region of the battery electrode sheet, but shall not come into contact with the electrode tab. If the electrode tab is damaged, breakage is likely to occur in subsequent winding.

Optionally, the proportion of active material loss caused by defining the groove 4 on either side of the current collector 1 is denoted as *R*. Preferably, the value range of *R* is [0.01%, 20%]. The number of the grooves 4 is restricted by limiting the amount of active material loss, so as to avoid excessive loss of the active material on the current collector 1, which would otherwise significantly affect the rated capacity or the charge N/P ratio of the battery, leading to undesirable phenomena such as low capacity or lithium plating. Meanwhile, an insufficient number of the grooves 4 is avoided, which would fail to effectively store electrolyte, increase the reaction area, or mitigate electrode sheet expansion. Preferably, for the groove 4 defined by laser etching or layered coating process, in order to prevent the originally unavoidable active material loss in the existing production process from affecting the formation of the groove 4, *R* needs to satisfy *R* ≥ 0.01%. Meanwhile, in order to avoid excessive loss of the active material on the current collector 1, which would otherwise significantly affect the rated capacity or the charge N/P ratio of the battery and lead to undesirable phenomena such as low capacity or lithium plating, so *R* needs to satisfy *R* ≤ 20%. For the groove 4 defined by rolling process, since a spatial volume inevitably exists when the groove 4 is defined by the rolling process, *R* needs to satisfy *R* ≥ 0.01%. Meanwhile, the rolling process will increase the compacted density of the coating layer at the bottom of the groove 4, which will affect the lithium deintercalation rate of the active material in that portion of the coating layer, so R needs to satisfy *R* ≤ 20%.

Optionally, the length and the width of the groove 4 on the current collector 1 are represented as *α* and *b,* respectively. The depth of the groove 4 on the current collector 1 is represented as *d.* The length of the current collector 1 is represented as *S*. The width of the active coating layer (i.e., the active coating layer formed by the first coating layer 2 and the second coating layer 3) is represented as *L.* Further, *d*₁ represents the thickness of the material region of the first coating layer, and *d₂* represents the thickness of the material region of the second coating layer. *M* represents the weight of the active material in the active coating layer, *n* represents the number of the grooves 4 on the current collector 1, *P*₁ represents the compacted density of the normal region on the current collector 1, i.e., the compacted density of the first coating layer 2, *w*₁ represents the proportion of active material in the first coating layer 2, and *P*₂ represents the compacted density of the region where the groove 4 is defined on the current collector 1, i.e., the compacted density of the second coating layer 3. Optionally, *P*₁ ≥ *P*₂, and *w*₂ represents the proportion of active material in the second coating layer 3.

Preferably, when the groove 4 is defined by laser etching or layered coating, the depth *d* of the groove 4 on the current collector 1 is expressed as follows: $d = \frac{SL \left({d}_{1}{P}_{1}{w}_{1}+{d}_{2}{P}_{2}{w}_{2}\right) - M}{{nabP}_{2} {w}_{2}} .$

When the groove 4 is defined by rolling, the depth d of the groove 4 on the current collector 1 shall satisfy *d* ≤ *d₂,* which limits the depth of the groove 4 to prevent excessive depth that would lead to excessive compaction of the active material at the bottom of the groove 4, causing the active material to be "over-pressed" and unable to normally deintercalate lithium.

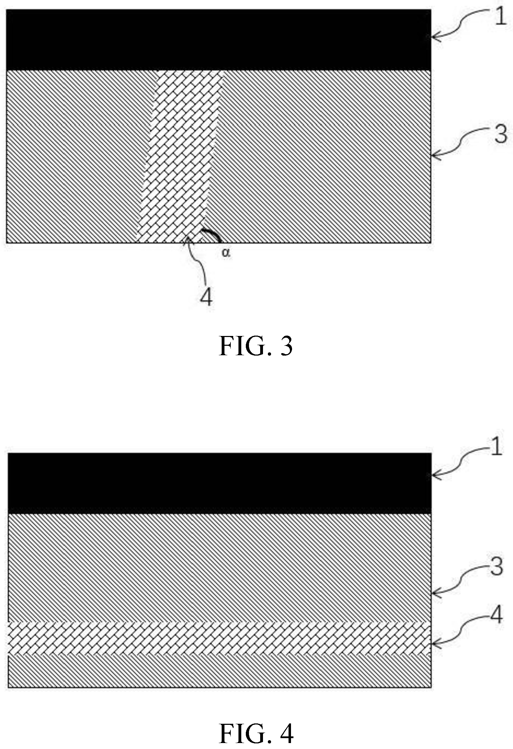

Optionally, referring to FIG. 3, the groove 4 has an inclination angle *α*.

Preferably, the inclination angle *α* is expressed as follows: ${tan}^{- 1} \frac{L}{S} \leq α \leq 90 ° .$

Preferably, when the groove 4 is defined by laser etching or layered coating, the proportion R at which the groove 4 may be provided is expressed as follows: $R = \frac{{nabdP}_{2} {w}_{2}}{SL \left({d}_{1}{P}_{1}{w}_{1}+{d}_{2}{P}_{2}{w}_{2}\right)} \times 100 % .$

When the groove 4 is defined by rolling, the material porosity may be ignored, and only the spatial volume of the groove 4 is defined. Therefore, the proportion R at which the groove 4 may be provided is expressed as follows: $R = \frac{nabd}{SL \left({d}_{1}+{d}_{2}\right)} \times 100 % .$

In some embodiments, the cross-sectional shape of the groove 4 is not fixed. Optionally, the cross-sectional shape of the groove 4 may be one of rectangular shape, a trapezoidal shape, a tapered shape, and an arc shape, etc. Optionally, the distribution position of the grooves 4 is not fixed. Optionally, the grooves 4 are uniformly distributed on the second coating layer 3. Optionally, the grooves 4 are distributed in a local region of the second coating layer 3. Optionally, the cross-sectional shapes of the grooves 4 on the same second coating layer 3 are not fixed, i.e., the cross-sectional shapes of the grooves 4 on the same second coating layer 3 may be one or more of rectangular, trapezoidal, tapered, and arc-shaped, etc. Optionally, the grooves 4 on the same second coating layer 3 may be spaced apart, i.e., the grooves 4 are independent of and separated from each other, or the grooves 4 are parallel to each other, or the grooves 4 are in an intersecting pattern. Further, on the second coating layer 3, there are both grooves 4 in an intersecting pattern and grooves 4 in a spaced-apart pattern, i.e., the grooves are in at least one of an intersecting pattern and a spaced-apart pattern.

In some embodiments, a battery includes the battery electrode sheet described above.

In some embodiments, form 1 of the battery electrode sheet is as shown in FIG. 1 and FIG. 2. The groove 4 on the second coating layer 3 is arranged vertically in the TD direction (corresponding to the height direction of the battery) of the battery electrode sheet, thereby constructing a vertical channel in the TD direction of the battery electrode sheet on the battery electrode sheet. Therefore, the battery electrode sheet can store electrolyte through the vertical channel in the TD direction of the battery electrode sheet, so that the wetting effect of the electrolyte on the battery electrode sheet is improved, and the flow rate of the electrolyte in the battery electrode sheet is accelerated. As a result, the reaction area of the active material on the surface of the battery electrode sheet is increased and the reaction activity is improved.

In some embodiments, form 2 of the battery electrode sheet is as shown in FIG. 3. The groove 4 on the second coating layer 3 is arranged obliquely in the TD direction (corresponding to the height direction of the battery) of the battery electrode sheet, thereby constructing an oblique channel in the TD direction of the battery electrode sheet on the battery electrode sheet. Therefore, through the oblique channel in the TD direction of the battery electrode sheet, the battery electrode sheet can greatly increase the reaction area of the active material on the surface of the battery electrode sheet and the electrolyte storage capacity, so that the wetting effect of the electrolyte on the battery electrode sheet is improved and the flow rate of the electrolyte in the battery electrode sheet is accelerated. Moreover, the channel serves as a gas discharge channel to effectively reduce the internal pressure of the battery, improve the safety performance of the battery, and mitigate the occurrence of side reactions between the battery electrode sheets.

In some embodiments, form 3 of the battery electrode sheet is as shown in FIG. 4. The groove 4 on the second coating layer 3 is arranged straight in the MD direction (corresponding to the width direction of the battery) of the battery electrode sheet, thereby constructing a straight channel in the MD direction of the battery electrode sheet on the battery electrode sheet. Therefore, the battery electrode sheet can store electrolyte through the straight channel in the MD direction of the battery electrode sheet, so that the wetting effect of the electrolyte on the battery electrode sheet is improved and the flow rate of the electrolyte in the battery electrode sheet is accelerated. As a result, the reaction area of the active material on the surface of the battery electrode sheet is increased and the reaction activity is improved. Moreover, additional space is provided, so as to mitigate battery electrode sheet expansion, material compression, and material fragmentation. Accordingly, non-uniform current distribution between the middle portion and both sides of the battery electrode sheet is alleviated.

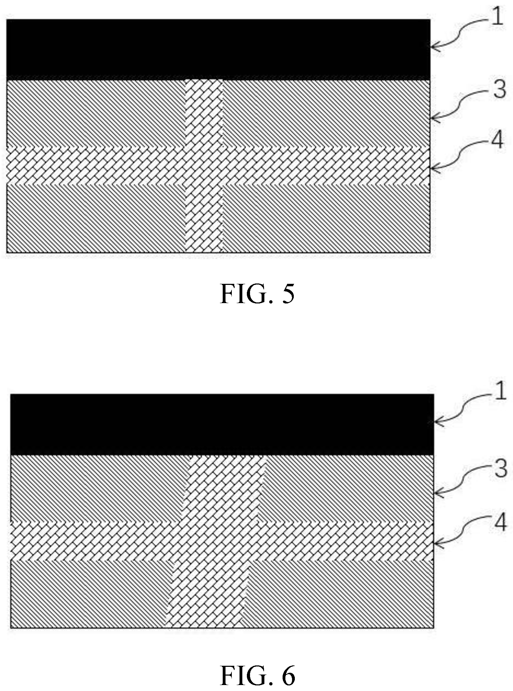

In some embodiments, form 4 of the battery electrode sheet is as shown in FIG. 5. The second coating layer 3 is provided with the groove 4 arranged vertically in the TD direction (corresponding to the height direction of the battery) of the battery electrode sheet, and the second coating layer 3 is provided with the groove 4 arranged straight in the MD direction (corresponding to the width direction of the battery) of the battery electrode sheet, thereby constructing a vertical channel in the TD direction of the battery electrode sheet and a straight channel in the MD direction of the battery electrode sheet on the battery electrode sheet. Optionally, the vertical channel and the straight channel are arranged in an intersecting pattern, so that the battery electrode sheet can store electrolyte through the channels arranged in an intersecting pattern in the TD direction and the MD direction of the battery electrode sheet, which improves the wetting effect of the electrolyte on the battery electrode sheet and accelerates the flow rate of the electrolyte in the battery electrode sheet. As a result, the reaction area of the active material on the surface of the battery electrode sheet is increased and the reaction activity is improved. Moreover, additional space is provided, so as to mitigate battery electrode sheet expansion, material compression, and material fragmentation. Accordingly, non-uniform current distribution between the middle portion and both sides of the battery electrode sheet is alleviated.

In some embodiments, form 5 of the battery electrode sheet is as shown in FIG. 6. The second coating layer 3 is provided with the groove 4 arranged obliquely in the TD direction (corresponding to the height direction of the battery) of the battery electrode sheet, and the second coating layer 3 is provided with the groove 4 arranged straight in the MD direction (corresponding to the width direction of the battery) of the battery electrode sheet, thereby constructing an oblique channel in the TD direction of the battery electrode sheet and a straight channel in the MD direction of the battery electrode sheet on the battery electrode sheet. Optionally, the oblique channel and the straight channel are arranged in an intersecting pattern. Therefore, through the channels arranged in an intersecting pattern in the TD direction and the MD direction of the battery electrode sheet, the battery electrode sheet can greatly increase the reaction area of the active material on the surface of the battery electrode sheet and the electrolyte storage capacity. This improves the wetting effect of the electrolyte on the battery electrode sheet and accelerates the flow rate of the electrolyte in the battery electrode sheet, and improves the cycle performance and the fast-charging performance of the battery. In particular, non-uniform current distribution between the middle portion and both sides of the battery electrode sheet is alleviated. Moreover, the channels serve as gas discharge channels to effectively reduce the internal pressure of the battery, improve the safety performance of the battery, and mitigate the occurrence of side reactions between the battery electrode sheets. Further, additional space is provided to mitigate battery electrode sheet expansion, material compression, and material fragmentation.

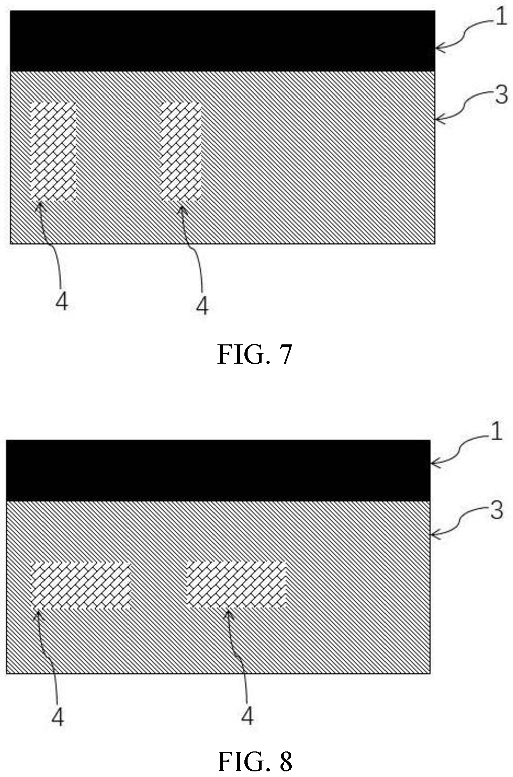

In some embodiments, form 6 of the battery electrode sheet is as shown in FIG. 7 and FIG. 8. Multiple grooves 4 are arranged vertically in the TD direction (corresponding to the height direction of the battery) of the battery electrode sheet on the second coating layer 3, thereby constructing multiple vertical channels in the TD direction of the battery electrode sheet on the battery electrode sheet. Therefore, the battery electrode sheet can store electrolyte through the multiple vertical channels in the TD direction of the battery electrode sheet, so that the wetting effect of the electrolyte on the battery electrode sheet is improved and the flow rate of the electrolyte in the battery electrode sheet is accelerated. As a result, the reaction area of the active material on the surface of the battery electrode sheet is increased and the reaction activity is improved. Furthermore, the multiple vertically arranged channels provide additional space to mitigate battery electrode sheet expansion, material compression, and material fragmentation, and can reduce the impedance of the battery electrode sheet.

Optionally, multiple grooves 4 are arranged straight in the MD direction (corresponding to the width direction of the battery) of the battery electrode sheet on the second coating layer 3, thereby constructing multiple straight channels in the MD direction of the battery electrode sheet on the battery electrode sheet. Therefore, the battery electrode sheet can store electrolyte through the multiple straight channels in the MD direction of the battery electrode sheet, so that the wetting effect of the electrolyte on the battery electrode sheet is improved and the flow rate of the electrolyte in the battery electrode sheet is accelerated. As a result, the reaction area of the active material on the surface of the battery electrode sheet is increased and the reaction activity is improved. Meanwhile, the cycle performance and the fast-charging performance of the battery are improved. In particular, non-uniform current distribution between the middle portion and both sides of the battery electrode sheet is alleviated. Furthermore, the multiple straightly arranged channels provide additional space to mitigate battery electrode sheet expansion, material compression, and material fragmentation, and can reduce the impedance of the battery electrode sheet.

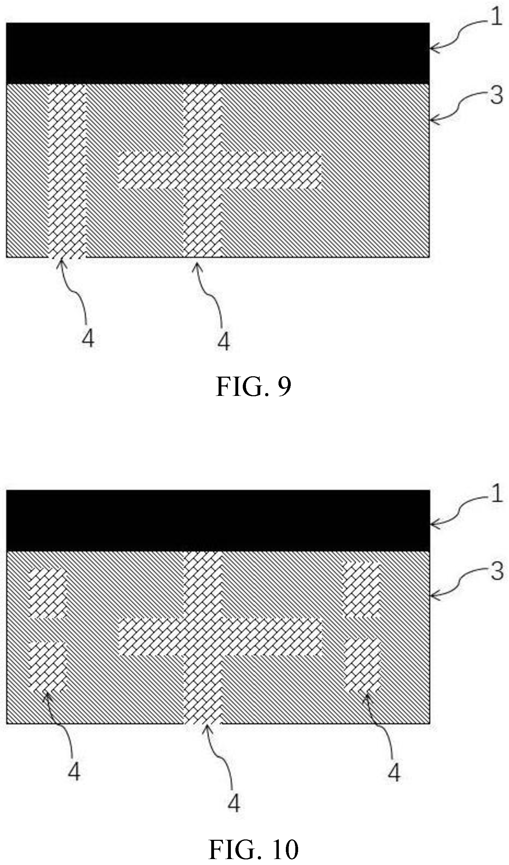

In some embodiments, form 7 of the battery electrode sheet is as shown in FIG. 9. The second coating layer 3 is provided with the groove 4 arranged in the TD direction (corresponding to the height direction of the battery) of the battery electrode sheet, and the second coating layer 3 is provided with the groove 4 arranged in the MD direction (corresponding to the width direction of the battery) of the battery electrode sheet, thereby constructing a channel arranged in the TD direction of the battery electrode sheet and a channel arranged in the MD direction of the battery electrode sheet on the battery electrode sheet. Optionally, the channel arranged in the TD direction of the battery electrode sheet can be distributed independently of the channel arranged in the MD direction of the battery electrode sheet. Optionally, the channel arranged in the TD direction of the battery electrode sheet and the channel arranged in the MD direction of the battery electrode sheet are arranged in an intersecting pattern. Optionally, there is a channel arranged in the TD direction of the battery electrode sheet distributed independently of a channel arranged in the MD direction of the battery electrode sheet, and a further channel arranged in the TD direction of the battery electrode sheet intersecting the channel arranged in the MD direction of the battery electrode sheet. Consequently, through the channels arranged in the TD direction of the battery electrode sheet and the channels arranged in the MD direction of the battery electrode sheet, the battery electrode sheet can greatly increase the reaction area of the active material on the surface of the battery electrode sheet and the electrolyte storage capacity, thereby improving the wetting effect of the electrolyte on the battery electrode sheet and accelerating the flow rate of the electrolyte in the battery electrode sheet. Further, non-uniform current distribution between the middle portion and both sides of the battery electrode sheet is alleviated, and additional space is further provided to mitigate battery electrode sheet expansion, material compression, and material fragmentation.

In some embodiments, form 8 of the battery electrode sheet is as shown in FIG. 10. The second coating layer 3 is provided with the groove 4 arranged in the TD direction (corresponding to the height direction of the battery) of the battery electrode sheet, and the second coating layer 3 is provided with the groove 4 arranged in the MD direction (corresponding to the width direction of the battery) of the battery electrode sheet. The channel arranged in the TD direction of the battery electrode sheet and the channel arranged in the MD direction of the battery electrode sheet are arranged in an intersecting pattern. Furthermore, the second coating layer 3 is provided with multiple grooves 4 independent of the channels arranged in an intersecting pattern in the TD direction and the MD direction of the battery electrode sheet, thereby constructing channels arranged in an intersecting pattern and channels independent of the intersecting-pattern channels on the battery electrode sheet. Therefore, through the above-mentioned channels, the battery electrode sheet can realize multiple functions such as storing electrolyte, improving the wetting effect of the electrolyte on the battery electrode sheet and accelerating the flow rate of the electrolyte in the battery electrode sheet, increasing the reaction area of the active material on the surface of the battery electrode sheet, mitigating lithium plating at both sides and in the middle portion of the electrode sheet, providing additional space to mitigate electrode sheet expansion, material compression, and material fragmentation, improving the cycle performance and the fast-charging performance of the battery, and reducing the impedance of the battery electrode sheet.

## Claims

1. A battery electrode sheet, comprising:
a current collector (1);
a first coating layer (2), wherein the first coating layer (2) is disposed on either side or both sides of the current collector (1);
a second coating layer (3), wherein the second coating layer (3) is stacked on the first coating layer (2); and
at least one groove (4), wherein the groove (4) is defined on the second coating layer (3).

2. The battery electrode sheet according to claim 1, wherein an areal density of the first coating layer (2) is greater than an areal density of the second coating layer (3).

3. The battery electrode sheet according to claim 1, wherein a compacted density of the first coating layer (2) is greater than a compacted density of the second coating layer (3).

4. The battery electrode sheet according to claim 1, wherein the groove (4) is arranged in a transverse direction (TD) of the battery electrode sheet or in a machine direction (MD) of the battery electrode sheet.

5. The battery electrode sheet according to claim 4, wherein the groove (4) is arranged vertically or obliquely in the TD direction of the battery electrode sheet.

6. The battery electrode sheet according to claim 5, wherein the groove (4) has an inclination angle *α,* and *α* is expressed as follows: ${tan}^{- 1} \frac{L}{S} \leq α \leq 90 ° ;$ wherein S represents a length of the current collector (1), and *L* represents a width of an active coating layer.

7. The battery electrode sheet according to any one of claims 4 to 6, wherein at least two grooves (4) are defined on the second coating layer (3), and the at least two grooves (4) are arranged in at least one of intersecting pattern and a spaced-apart pattern.

8. The battery electrode sheet according to any one of claims 1 to 6, wherein when the groove (4) is defined by laser etching or layered coating, a depth of the groove (4) on the current collector (1) is denoted as *d,* and *d* is expressed as follows: $d = \frac{SL \left({d}_{1}{P}_{1}{w}_{1}+{d}_{2}{P}_{2}{w}_{2}\right) - M}{{nabP}_{2} {w}_{2}} ;$ wherein *a* represents a length of the groove (4), *b* represents a width of the groove (4), *d* represents the depth of the groove (4) on the current collector (1), *P*₂ represents a compacted density of the second coating layer (3), _{*W*2} represents a proportion of active material in the second coating layer (3), *d*₂ represents a thickness of the second coating layer, *S* represents a length of the current collector (1), *L* represents a width of an active coating layer, *d*₁ represents a thickness of the first coating layer, *P*₁ represents a compacted density of the first coating layer (2), *w*₁ represents a proportion of active material in the first coating layer (2), *M* represents a weight of active material in the active coating layer, and *n* represents a number of the grooves (4) on the current collector (1).

9. The battery electrode sheet according to claim 8, wherein a proportion of active material loss caused by defining the groove (4) on either side of the current collector (1) is denoted as *R,* and *R* is expressed as follows: $R = \frac{{nabdP}_{2} {w}_{2}}{SL \left({d}_{1}{P}_{1}{w}_{1}+{d}_{2}{P}_{2}{w}_{2}\right)} \times 100 % .$

10. The battery electrode sheet according to any one of claims 1 to 6, wherein when the groove (4) is defined by rolling, a depth of the groove (4) on the current collector (1) satisfies *d < d₂;* wherein *d* represents the depth of the groove (4) on the current collector (1), and *d₂* represents the thickness of the second coating layer.

11. The battery electrode sheet according to claim 10, wherein a proportion of active material loss caused by defining the groove (4) on either side of the current collector (1) is denoted as *R,* and *R* is expressed as follows: $R = \frac{nabd}{SL \left({d}_{1}+{d}_{2}\right)} \times 100 % .$

12. The battery electrode sheet according to claim 9 or 11, wherein 0.01% ≤ *R* ≤ 20%.

13. The battery electrode sheet according to claim 8, wherein the width of the groove (4) is less than or equal to the width of the active coating layer.

14. The battery electrode sheet according to claim 8, wherein the length of the groove (4) is less than or equal to the length of the current collector (1).

15. A battery, comprising the battery electrode sheet according to any one of claims 1 to 14.
